# EUROPEAN PATENT APPLICATION

(11) **EP 4 811 771 A1**
(43) Date of publication of application: **23.09.2026**
(21) Application number: 25305385.4
(22) Date of filing: 19.03.2025
(51) Int. Cl.: H04N 19/105, H04N 19/159, H04N 19/172, H04N 19/187, H04N 19/30, H04N 19/70

(54) **MULTILAYER WITH NEURAL NETWORK CODED EXTERNAL PICTURES AND RELATED HLS**

(71) Applicant: InterDigital CE Patent Holdings, SAS, 75017 Paris (FR)
(72) Inventor: CHEN, Ya, 35700 RENNES (FR); URBAN, Fabrice, 35235 THORIGNE-FOUILLARD (FR); GALPIN, Franck, 35235 THORIGNE-FOUILLARD (FR); LO BIANCO, Federico, 35700 RENNES (FR); SCHNITZLER, Francois, 56890 SAINT AVE (FR); LAMBERT, Anne, 35250 SAINT-AUBIN-D'AUBIGNE (FR); DAMODARAN, Bharath Bhushan, 56000 VANNES (FR); LE MEUR, Olivier, 35160 TALENSAC (FR); DE LAGRANGE, Philippe, 35830 BETTON (FR); FRANCOIS, Edouard, 35890 BOURG DES COMPTES (FR)
(74) Representative: Vossius & Partner Patentanwälte Rechtsanwälte mbB

(57) **Abstract**

Features described herein are associated with multilayer with neural network coded external pictures and related high-level syntax (HLS). In examples, a device (e.g., a video decoding device may) obtain video data associated with layers. The device may obtain a first picture associated with a first layer of the layers. The first picture may be coded using a first codec that is based on a neural network (NN). The device may obtain a second picture associated with a second layer of the layers. The second picture may be coded using a second codec that is different from the first codec. The device may decode the second picture using the first picture and the second codec.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Features described herein are associated with multilayer with neural network coded external pictures and related high-level syntax (HLS). In examples, a device (e.g., a video decoding device) may obtain video data associated with a plurality of layers. The device may obtain a first picture associated with a first layer of the layers. The first picture may be coded using a first codec that is based on a neural network (NN). The device may obtain a second picture associated with a second layer of the layers. The second picture may be coded using a second codec that is different from the first codec. The device may decode the second picture using the first picture and the second codec.

In examples, a device (e.g., a video encoding device) may obtain video data associated with layers. The device may determine that the video data is associated with a plurality of layers. The device may obtain a first picture associated with a first layer of layers. The first picture may be coded using a first codec that is based on a neural network (NN). The device may encode, based on the first picture and a second codec, a second picture associated with a second layer of the layer. The second codec may be different from the first codec. The device may generate a residual based on the encoded second picture. The device may include the residual in the video data.

The first layer may be a base layer and the second layer may be an enhancement layer. The device may obtain a third picture (e.g., a base layer picture of ILRP) associated with the first layer from an external source. The external source may be associated with a third codec. The third codec (e.g., NN codec or other codecs (e.g., HEVC)) may be different from the second codec. The third picture may be modified using one or more coding tools associated with the second codec, for example.

The device may generate a reference picture list (RPL) for the second picture. The reference picture list may indicate the third picture as an inter-layer reference picture (ILRP). The device may obtain an indicator of a picture order count (POC) associated with the third picture. The device may identify the third picture in the RPL based on the indicator of the POC. The device may predict the second picture using the third picture as the ILRP.

The device may obtain a parameter set (e.g., SPS, VPC, etc.). The device may obtain an external picture indicator from the parameter set. The device may determine, based on the external picture indicator, that the first layer comprises an external picture. The device may modify the third picture based on a reduced version of the parameter set (e.g., reduced SPS). The device may predict the second picture using the modified third picture.

The device may obtain a first parameter set (e.g., VPS). The device may obtain from the first parameter set, an external picture indicator. The device may determine, based on the external picture indicator, that the first layer comprises an external picture. The device may modify the third picture using a second parameter set (e.g., new EPS). The device may predict the second picture using the modified third picture. The second parameter set may be an external parameter set.

The device may receive metadata associated with the third picture via a supplemental enhancement information (SEI). The third picture may be modified further based on the metadata. The device may determine, based on a field of a network abstraction layer (NAL) unit type indicator or a slice type indicator in a slice header, that the first picture associated with the first layer is coded using the first codec that is based on a neural network (NN).

The video data may be received via a first bitstream. The device may determine that the first picture associated with the first layer is an external picture. The device may obtain the first picture via a second bitstream. The second bitstream may be an external bitstream associated with an external source. The first picture may be an intra picture type. The second picture may be an inter picture type.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example end-to-end compression system.
FIG. 5 illustrates an example of scalable video coding.
FIG. 6 illustrates an example of a hybrid method to coding intra frames with neural networks (NN) and coding inter frames with an example video codec (e.g., a (versatile video coding) VVC codec).
FIG. 7 illustrates an example of a multilayer scheme to coding frames in a base layer with NN codec and coding frames in an enhancement layer an example video codec (e.g., a VVC codec.
FIG. 8 illustrates an example of frames with different sizes in a base layer and an enhancement layer by using scaling windows.
FIG. 9 illustrates an example of a multilayer scheme to coding frames in an enhancement layer with referencing frames in a base layer with different picture order count (POC).

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

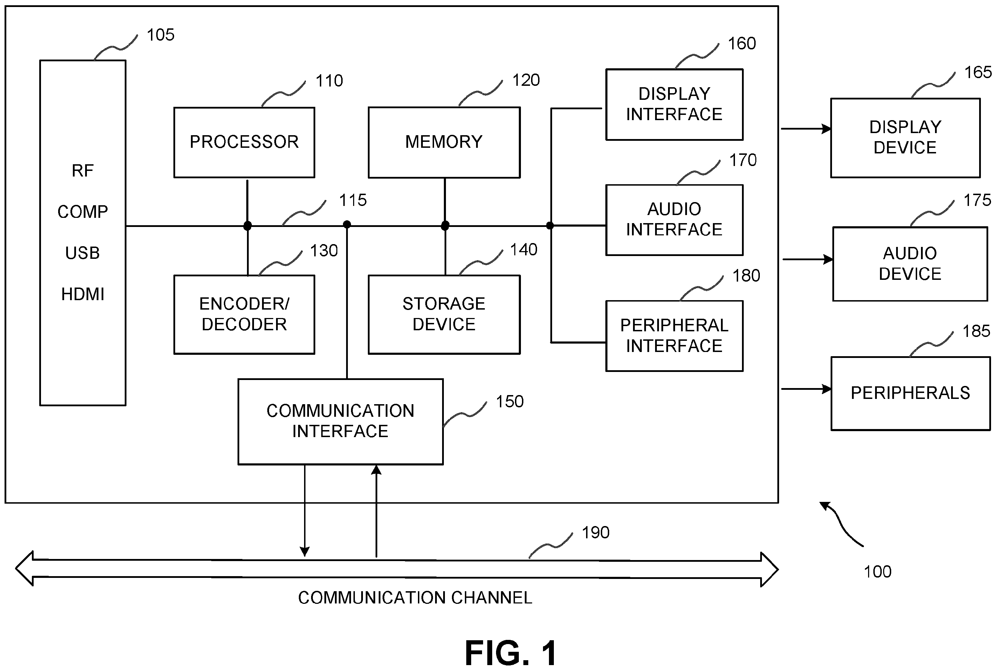

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

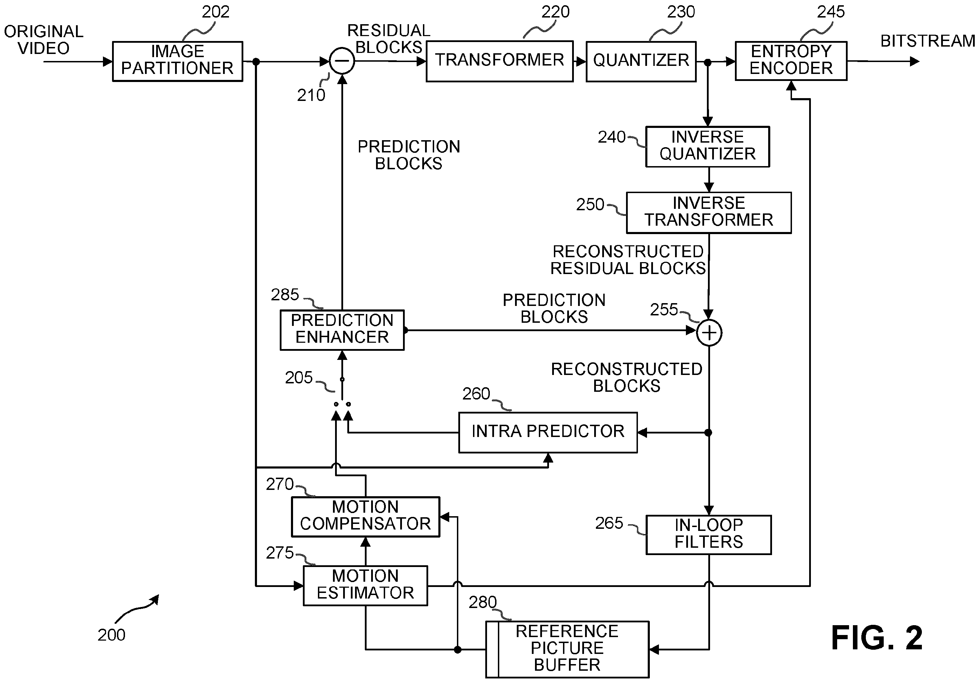

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

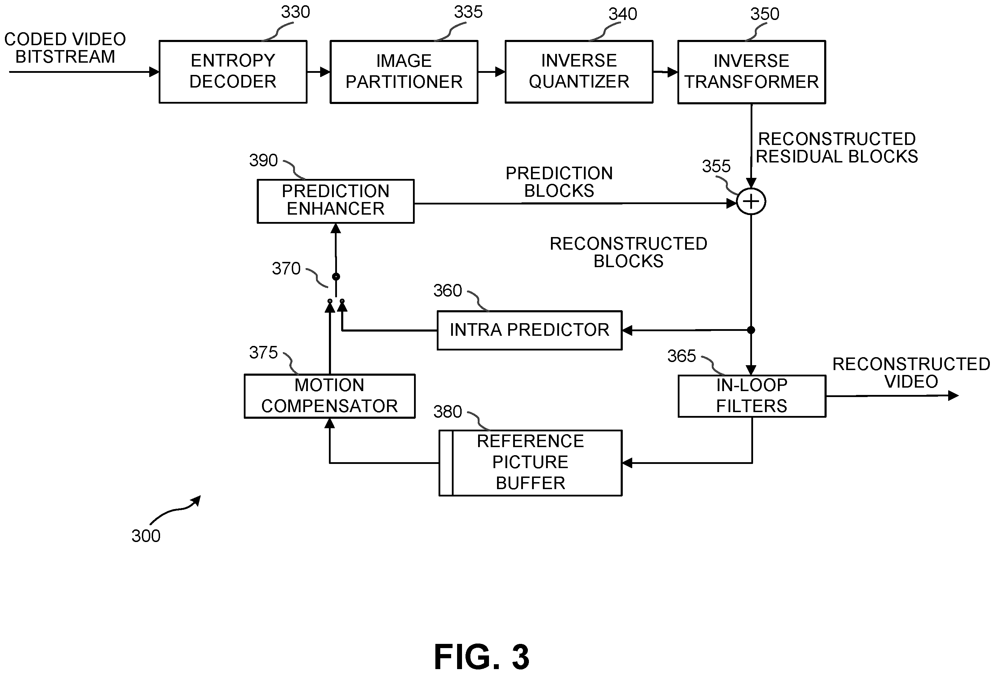

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Features described herein are associated with multilayer with neural network coded external pictures and related high-level syntax (HLS). In examples, a device (e.g., a video decoding device) may obtain video data associated with a plurality of layers. The device may obtain a first picture associated with a first layer of the layers. The first picture may be coded using a first codec that is based on a neural network (NN). The device may obtain a second picture associated with a second layer of the layers. The second picture may be coded using a second codec that is different from the first codec. The device may decode the second picture using the first picture and the second codec.

In examples, a device (e.g., a video encoding device) may obtain video data associated with layers. The device may determine that the video data is associated with a plurality of layers. The device may obtain a first picture associated with a first layer of layers. The first picture may be coded using a first codec that is based on a neural network (NN). The device may encode, based on the first picture and a second codec, a second picture associated with a second layer of the layer. The second codec may be different from the first codec. The device may generate a residual based on the encoded second picture. The device may include the residual in the video data.

The first layer may be a base layer and the second layer may be an enhancement layer. The device may obtain a third picture (e.g., a base layer picture of ILRP) associated with the first layer from an external source. The external source may be associated with a third codec. The third codec (e.g., NN codec or other codecs (e.g., HEVC)) may be different from the second codec. The third picture may be modified using one or more coding tools associated with the second codec, for example.

The device may generate a reference picture list (RPL) for the second picture. The reference picture list may indicate the third picture as an inter-layer reference picture (ILRP). The device may obtain an indicator of a picture order count (POC) associated with the third picture. The device may identify the third picture in the RPL based on the indicator of the POC. The device may predict the second picture using the third picture as the ILRP.

The device may obtain a parameter set (e.g., SPS, VPC, etc.). The device may obtain an external picture indicator from the parameter set. The device may determine, based on the external picture indicator, that the first layer comprises an external picture. The device may modify the third picture based on a reduced version of the parameter set (e.g., reduced SPS). The device may predict the second picture using the modified third picture.

The device may obtain a first parameter set (e.g., VPS). The device may obtain, from the first parameter set, an external picture indicator. The device may determine, based on the external picture indicator, that the first layer comprises an external picture. The device may modify the third picture using a second parameter set (e.g., new EPS). The device may predict the second picture using the modified third picture. The second parameter set may be an external parameter set.

The device may receive metadata associated with the third picture via a supplemental enhancement information (SEI). The third picture may be modified further based on the metadata. The device may determine, based on a field of a network abstraction layer (NAL) unit type indicator or a slice type indicator in a slice header, that the first picture associated with the first layer is coded using the first codec that is based on a neural network (NN).

The video data may be received via a first bitstream. The device may determine that the first picture associated with the first layer is an external picture. The device may obtain the first picture via a second bitstream. The second bitstream may be an external bitstream associated with an external source. The first picture may be an intra picture type. The second picture may be an inter picture type.

In examples, a device for video decoding/encoding may include a processor. The device may obtain a first picture associated with video content. The device may decode/encode a second picture associated with the video content using a second codec/type of decoder (e.g., WC) that is different from a first codec/type of decoder (e.g., NN codec or HEVC codec) associated with the first picture. The first and second pictures may be different picture types.

The device may determine that the first picture is an intra-picture, and the first picture may be decoded using a neural network (NN) codec. The device may determine that the second picture is an inter-picture. The second picture may be decoded using a codec that is different from the NN codec.

The device may obtain the first picture from an external source associated with the first codec.

The device may determine that the first picture is a base layer picture. The device may determine that the second picture is an enhancement layer picture.

The device may determine, based on a field of a network abstraction layer (NAL) unit type indicator or a slice type indicator in a slice header, that the first picture is coded using the first codec, that is based on a neural network (NN).

The video content may be received via a first bitstream. The device may determine that the first picture is an external picture. The device may obtain the first picture via a second bitstream. The second bitstream may be an external bitstream associated with an external source.

The device may be a video for video decoding. The device may include a processor. The device may obtain video data associated with a plurality of layers. The device may obtain a first picture associated with a first layer of the plurality of layers. The first picture may be coded using a first codec. The device may obtain a second picture associated with a second layer of the plurality of layers. The second picture may be coded using a second codec that is different from the first codec.

The device may decode the second picture using the first picture and the second codec.

The device may generate a reference picture list (RPL) for the second picture, and the reference picture list may indicate the first picture as an inter-layer reference picture (ILRP). The device may obtain an indicator of a picture order count (POC) associated with the first picture. The device may identify the first picture in the RPL based on the indicator of the POC. The device may predict the second picture using the first picture as the ILRP.

The device may obtain a parameter set. The device may obtain an external picture indicator from the parameter set. The device may determine, based on the external picture indicator, that the first layer comprises an external picture. The device may modify the first picture based on a reduced version of the parameter set or a second parameter set. The device may predict the second picture using the modified first picture.

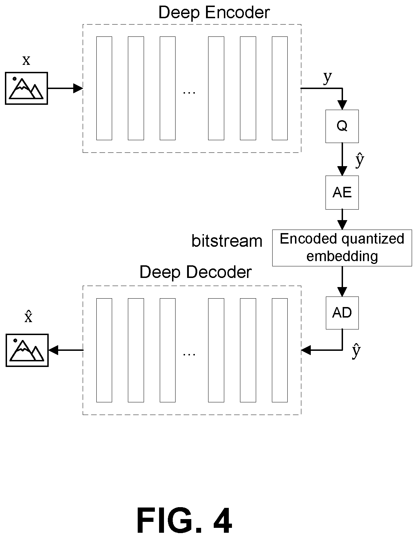

Features described herein may be associated with neural based compression, for example, video codec and neural network-based approaches with respect thereto. Featues described herein may be associated with an auto-encoder. FIG. 4 illustrates an example of an end-to-end compression system. An input image to be compressed, x, may be first processed by a deep encoder. The output of the encoder, y, may be called the embedding of the image. The embedding may be converted into video data (e.g., a bitstream) by going through a quantizer, Q, and through an arithmetic encoder, AE. The resulting bitstream may be decoded by going through an arithmetic decoder, AD, to reconstruct the quantized embedding, *y̌*. The reconstructed quantized embedding may be processed by a deep decoder to obtain the decompressed image, *x̂*.

The deep encoder and decoder may include one or more neural layers, such as convolutional layers. A neural layer may be described as a function that multiplies the input by a tensor, adds a vector called the bias, and applies a nonlinear function on the resulting values. The shape (and other characteristics, for example) of the tensor and the type of non-linear functions are called the architecture of the network. The values of the tensor and the bias may be denoted by the term weights. The weights and, if applicable, the parameters of the non-linear functions, are called the parameters. The architecture and the parameters may describe a model. The encoder and decoder may be fixed and known at encoding and decoding times. The layers of the decoder may be denoted by *l*₁, ... *lᵢ,* ..., *lₙ* and its parameters by *θ*.

A model M may be trained on databases D of images to learn the weights of the encoder and decoder. The weights may be configured to minimize a training loss ${L}_{T} \left(M, D\right) = {E}_{x ∼ D} \left[-log\left({p}_{M}\left(\hat{y}\right)\right)+λd\left(x, \hat{x}\right)\right] ,$ where *p_{M}* denotes the probability of the quantized embedding in examples, M (the term may be the theoretical lower bound on bitstream size for the encoded quantized embeddings), *d*(.,.) a measure of the distortion between the original and the reconstructed image ( e.g., the mean square error) and *λ* a parameter controlling the trade-off between the rate (r) and distortion (d) terms.

An architecture may be trained (e.g., several) times, using different values for *λ*, to yield a set of models {*Mᵢ*} with different r/d trade-offs Architectures may yield models with r/d points. To compare the architectures, the r/d points of an architecture may be interpolated, resulting in a function d(r) for each architecture that provides a distortion estimate for a rate value.

The deep decoder may decode a type of image. The deep decoder may perform on average for images. The rate distortion trade-off may be affected for a single video by retraining the decoder for a video and by transmitting weight updates *δ* for the decoder in addition to the quantized embeddings for intra frames of the video . Before decoding the quantized embedding, *δ* may be added to *θ*. The loss used for fine tuning may be: ${L}_{FT} \left(M, δ, x\right) = - log \left({p}_{Δ}\left(δ\right)\right) + β d \left(x,\hat{x}\left(δ\right)\right) ,$ where *p*_{Δ}(. ) denotes a probability density over weight updates, *x̂*(*δ*) the image reconstructed by the decoder whose weights include been updated by *δ* and *β* a trade-off between the two losses. In examples, a term may be added to the loss to enforce a global sparsity constraint on *δ*, so that a lot of weight update are the same value (0), to make encoding more efficient.

In examples, decoding the image may include two operations. The decoder may be updated with the weight updates. *ŷ* may be decoded by the updated decoder.

Features described herein may be associated with an auto-encoder and a codec. A neural network based auto-encoder may be combined with a codec by allowing the encoder to choose between a traditional codec such as VVC test model (VTM) or a neural network-based auto encoder to encode an intra-coded frame.

Features described herein may include a bitstream syntax and multilayer structure. In block-based hybrid video coding, a standardized syntax may allow for signaling the coding tools that are active in the coded video chunks. In examples, no syntax elements may allow signaling the use of a neural network auto-encoder to encode part of the video.

A video encoder may generate (e.g., several) bitstreams (e.g., layers) which allow encoding video sequences with an enhanced quality/feature vs base layer stream. The reconstructed images may enhance resolution (e.g., spatial scalability), quality (e.g., SNR scalability), frame rate (e.g., temporal scalability), color gamut (e.g., color gamut scalability, high dynamic range scalability), bit-depth (e.g., bit-depth scalability), additional point-of-view (e.g., multi-view scalability).

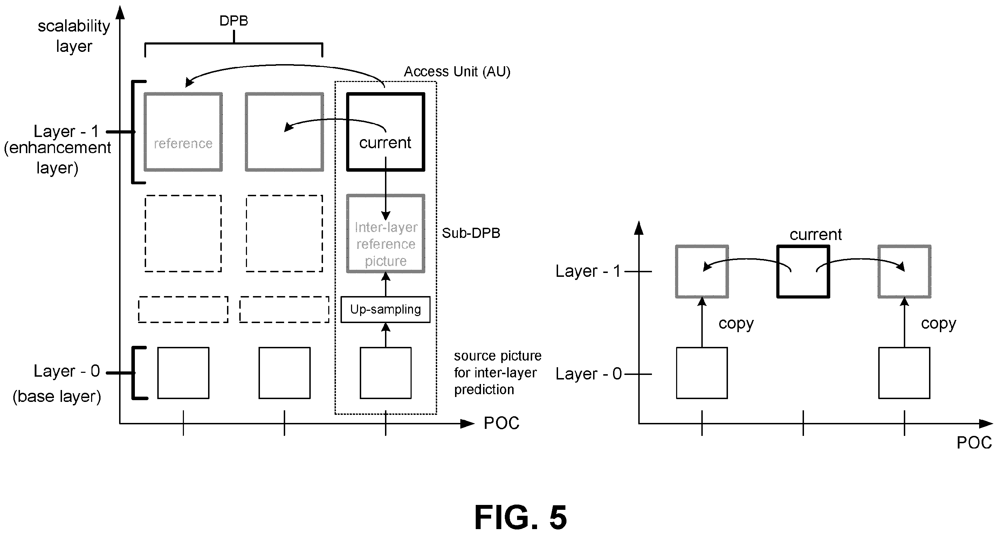

FIG. 5 illustrates an example of scalable video coding. The scalable video codecs may leverage the capability to predict blocks with reconstructed images from another bitstream/layer. FIG. 5 (left) may depict spatial scalability where the reconstructed pictures from the base layer (layer 0) may be re-scaled (e.g., up-sampled) and used as additional reference frame (e.g., inter-layer reference picture, ILRP) for building inter-prediction for the current enhancement layer (e.g., layer 1). The inter-layer reference picture (ILRP) may be temporally co-located (e.g., same picture order count, POC) with the current picture of the current layer. FIG. 5 (right) depicts temporal scalability where additional temporal pictures are coded predicted with reconstructed reference frames from the base layer bitstream.

In examples, a picture of a current layer may be predicted with a reconstructed picture decoded from a base layer (layer 0) coded differently (e.g., layer 1 may be encoded by x, layer 0 may be encoded by y). A mode may be addressed in an example of a base layer (layer 0), and the other layers may be coded differently.

In examples, an encoder (e.g., a VTM encoder) may decide for an intra-coded frame (I-frame) whether the frame (e.g., VTM coded frame) may be used or a frame coded with the I-frame coder of an auto-encoder based neural network encoder may be used. In examples, syntax may (or may not) allow to specify that part of the video may be encoded using a neural network (NN) codec. Features descried herein may be utilized to indicate various decoding methods that may have been used for coding various parts of a video.

In examples described herein, a multilayer structure may be reused and adjusted, allowing the base layer (or other layers) to be filled with NN-coded external pictures. Information of coding of an external NN-coded picture or bitstream may be described herein, including introducing high-level syntaxes (HLS), which may be used to enable/disable/add information.

In examples described herein, a hybrid mechanism may be utilized where one or more intra frames may be coded using neural networks (NN), and remaining one or more inter frames may be coded using another example video codec (e.g., a VVC codec). To handle such a hybrid NN- codec, a multilayer scheme may be employed to allow the video to be coded in multiple layers with different video codecs. Features detailed herein also describe high-level syntax (HLS) information for a decoder to reconstruct a video.

In examples, a hybrid codec may be associated with intra frames that are coded using neural networks (NN) and inter frames may be coded using an example video codec (e.g., a VVC codec). Multilayer video coding may be used to allow frames in an enhancement layer with capabilities to reference and enhance the NN-coded intra picture base layer.

External picture (e.g., for a base layer) syntax and a direct syntax may be used to construct the reference picture list (RPL) in the enhancement layer for a base layer with external pictures.

A reduced sequence parameter set (SPS) (or picture parameter set/slice header/picture header) may be used, or an external parameter set (EPS) may be determined, or a Supplemental Enhancement Information (SEI) may be added for the base layer with external pictures.

Information on the NAL unit or slice type of coding of the external picture coded with NN codec may be added, which may be used to enable/disable/add information.

An external frame/picture may be extended for the external bitstream. The external codec may be codecs other than a NN codec. A hybrid codec may be done outside of the multi-layer structure.

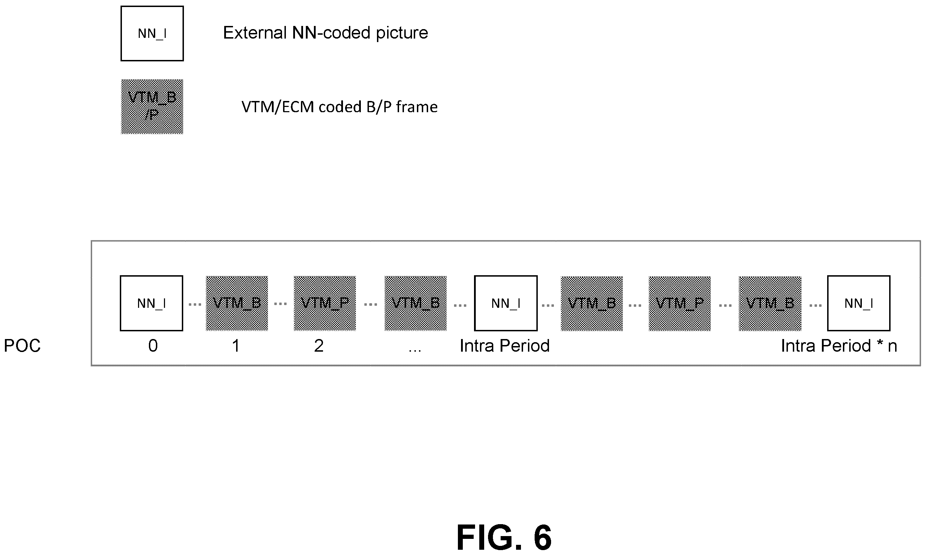

Features described herein may include a multilayer scheme for a hybrid NN- codec. In order to achieve higher video compression efficiency, an in examples described herein to enhance video encoding involves a hybrid coded where Intra frames are coded using neural networks (NN), such as Implicit Neural Representation (INR) or auto encoder; while remaining Inter frames are coded for example, as shown in FIG. 6. In examples including a hybrid codec leverages the strengths of at least NN for the encoding process.

Features described herein may include Intra Frames with Neural Networks. Intra frames, known as keyframes, may serve as reference points for subsequent frames. By using neural networks (such as INR or auto encoder) to code Intra frames, the compression efficiency and quality may be improved. Neural networks may identify and preserve details and patterns within the frames, leading to higher quality keyframes with reduced data size. Scenes with complex textures and dynamic lighting may be associated with higher efficiency when paired with neural networks

Features described herein may be associated with inter frames. Inter frames may be coded. By using an example video coded for Inter frames, temporal redundancy between frames may be effectively minimized, leading to better compression rates.

Features described herein may include multilayer scheme for hybrid NN- codec. For the hybrid NN- codec, a multilayer scheme may allow a frame in an enhancement layer with capabilities to reference and enhance the NN-coded intra picture in the base layer. Using multilayer scheme in scalable video coding may allow the video to be encoded in one or more layers, and a layer may be coded in (e.g., different) video codecs.

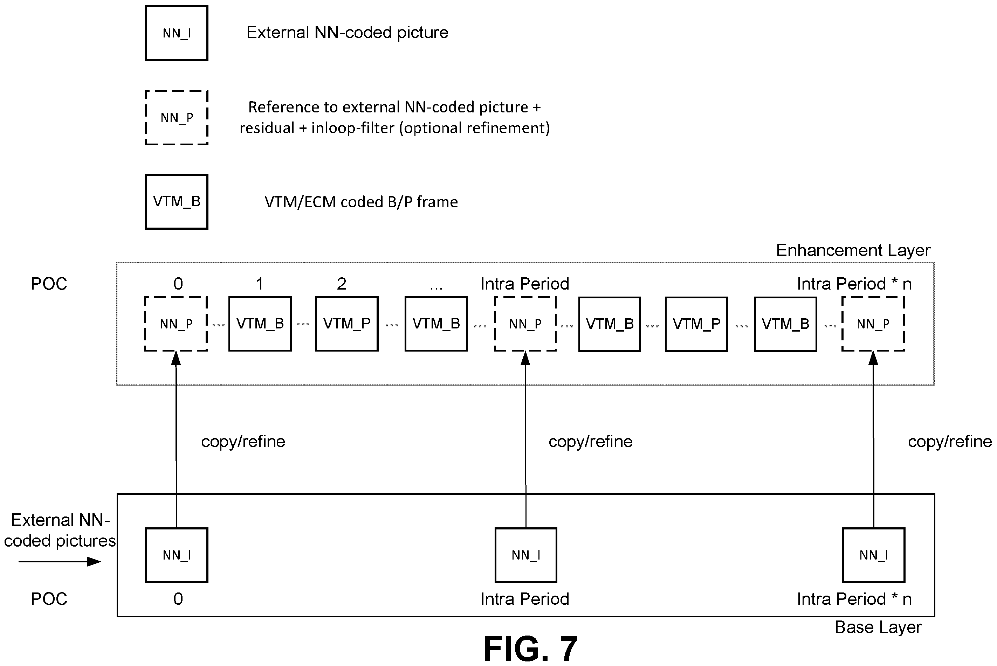

The base layer (BL) may be filled with NN-coded (e.g., INR or auto encoder) external pictures. Above the base layer, there may be enhancement layers that are coded with example (e.g., traditional) video codecs, as shown in FIG. 7.

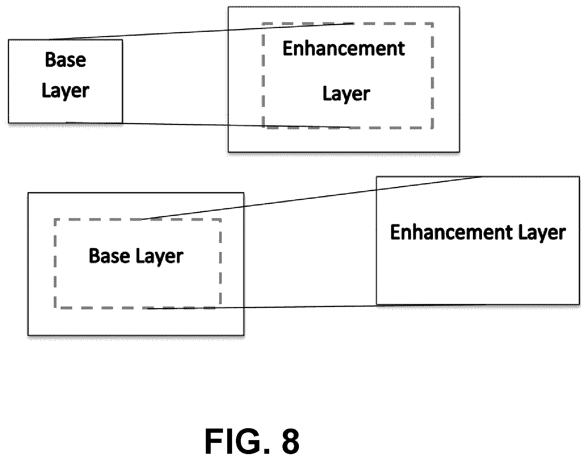

The external NN-coded pictures from the base layer (e.g., layer 0) may be used as reference frame (e.g., inter-layer reference picture) for building inter-prediction for the current enhancement layer (e.g., layer 1). The inter-layer reference picture (ILRP) may be temporally co-located (e.g., same picture order count, POC) with the current picture of the current layer. It may be of different size and/or having a different framing (e.g., by using scaling windows as depicted in FIG. 8).

The external NN-coded pictures may be (e.g., further) refined with the video residual and in-loop filter coding tools, such as adaptive loop filtering (ALF), in the enhancement layer. The refined NN-coded pictures may be used as reference frames for the subsequent inter frames. A CU may be coded intra or inter (e.g., inter with inter-layer prediction - so there may be a competition between the NN picture and the intra, and the final CU may be intra-coded. NN-coded may be determined via RDO cost).

The enhancement layer slice header and reference picture list (RPL) structure may reference an external base layer picture. An example video setup may include a base layer and an enhancement layer.

The Base Layer (Layer 0) may be provided externally with NN-coded pictures. In the Enhancement Layer (Layer 1), at each Picture Order Count (POC) that is a multiple of the intra period. The picture in the layer may use inter-layer prediction, referencing the external NN-coded pictures from the base layer. Subsequent frames may use inter prediction associated with an example coded (e.g., a WC codec).

The base layer may include a POC of 64, which the co-located picture (e.g., POC of 64) in the enhancement layer may reference. The decoding process may include (e.g., several) operations so that the correct base layer picture may be used.

In examples, flags may be set in Video Parameter Set (VPS) to inform the decoder about the external base layer in SHVC (e.g., vps_base_layer_internal_flag = 0 // base layer may or may not be internally decoded. vps_base_layer_available_flag = 1 // base layer may be available externally).The flags may indicate that the base layer (Layer 0) is provided externally.

Flags may be used to indicate the external base layer are still missing in an example video codec (e.g., VVC codec). An operation in examples described herein may include setting an additional external picture syntax within the Video Parameter Set (VPS) or Sequence Parameter Set (SPS) to inform the decoder about the external pictures in base layer.

**Table 1**

| | |
|---|---|
| video_parameter_set_rbsp() { | Descriptor |
| vps_video_parameter_set_id | u(4) |
| vps_base_layer_external_flag | u(1) |
| vps_max_layers_minus1 | u(6) |
| vps_max_sublayers_minus1 | u(3) |
| ... | ... |

or,

**Table 2**

| | |
|---|---|
| seq_parameter_set_rbsp( ) { | Descriptor |
| sps_seq_parameter_set_id | u(4) |
| sps_base_layer_external_flag | u(1) |
| sps_video_parameter_set_id | u(4) |
| ... | ... |

vps_base_layer_external_flag or sps_base_layer_external_flag equal to 1 may specify that pictures in the base layer are externally decoded. The flag may indicate that the base layer pictures are not decoded internally by the decoder and are provided from an external source. The presence of the flag may enable the decoder to correctly interpret the base layer as being externally available and not attempt to decode the flag from video data (e.g., the bitstream). The mechanism may allow for efficient handling of base layer pictures, for example, where external neural network coded pictures are used.

In examples, if/when vps_base_layer_external_flag or sps_base_layer_external_flag equals to 1, a reduced SPS may be applied for base layer, which means that some syntaxes in the SPS may not signaled and/or may be inferred to (e.g., default) values.

As an example, shown in the following table, in the reduced SPS for base layer, the partition and enabling/disabling the coding tool (e.g., MTS/LFNST/AMVR/BDOF/AFFINE/LMCS...) related syntaxes, may be discarded. Loop-filter syntaxes (e.g., ALF related) may be kept if external base layer pictures are needed to be further refined with the filtering. Table 3 is associated with a reduced sequence parameter set RBSP syntax.

**Table 3**

| | |
|---|---|
| Reduced_seq_parameter_set_rbsp() { | **Descriptor** |
| sps_seq_parameter_set_id | u(4) |
| sps_video_parameter_set_id | u(4) |
| sps_max_sublayers_minus1 | u(3) |
| sps_chroma_format_idc | u(2) |
| sps_log2_ctu_size_minus5 | u(2) |
| sps_ptl_dpb_hrd_params_present_flag | u(1) |
| if( sps_ptl_dpb_hrd_params_present_flag ) | |
| profile_tier_level( 1, sps_max_sublayers_minus1 ) | |
| sps_gdr_enabled_flag | u(1) |
| sps_ref_pic_resampling_enabled_flag | u(1) |
| if( sps_ref_pic_resampling_enabled_flag ) | |
| sps_res_change_in_clvs_allowed_flag | u(1) |
| sps_pic_width_max_in_luma_samples | ue(v) |
| sps_pic_height_max_in_luma_samples | ue(v) |
| sps_conformance_window_flag | u(1) |
| if( sps_conformance_window_flag ) { | |
| sps_conf_win_left_offset | ue(v) |
| sps_conf_win_right_offset | ue(v) |
| sps_conf_win_top_offset | ue(v) |
| sps_conf_win_bottom_offset | ue(v) |
| } | |
| sps_bitdepth_minus8 | ue(v) |
| sps_entry_point_offsets_present_flag | u(1) |
| sps_log2_max_pic_order_cnt_lsb_minus4 | u(4) |
| sps_poc_msb_cycle_flag | u(1) |
| if( sps_poc_msb_cycle_flag ) | |
| sps_poc_msb_cycle_len_minus1 | ue(v) |
| sps_num_extra_ph_bytes | u(2) |
| for( i = 0; i < (sps_num_extra_ph_bytes * 8 ); i++) | |
| sps_extra_ph_bit_present_flag[ i ] | u(1) |
| sps_num_extra_sh_bytes | u(2) |
| for( i = 0; i < (sps_num_extra_sh_bytes * 8 ); i++) | |
| sps_extra_sh_bit_present_flag[ i ] | u(1) |
| if( sps_ptl_dpb_hrd_params_present_flag ) { | |
| if( sps_max_sublayers_minus1 > 0 ) | |
| sps_sublayer_dpb_params_flag | u(1) |
| dpb_parameters( sps_max_sublayers_minus1, sps_sublayer_dpb_params_flag ) | |
| } | |
| sps_alf_enabled_flag | u(1) |
| sps_long_term_ref_pics_flag | u(1) |
| if( sps_video_parameter_set_id> 0 ) | |
| sps_inter_layer_prediction_enabled_flag | u(1) |
| sps_idr_rpl_present_flag | u(1) |
| sps_rpl1_same_as_rpl0_flag | u(1) |
| for( i = 0; i < ( sps_rpl1_same_as_rpl0_flag ? 1 : 2); i++) { | |
| sps_num_ref_pic_lists[ i ] | ue(v) |
| for( j = 0; j < sps_num_ref_pic_lists[ i ]; j++) | |
| ref_pic_list_struct( i, j ) | |
| } | |
| if( sps_chroma_format_idc = = 1 ) { | |
| sps_chroma_horizontal_collocated_flag | u(1) |
| sps_chroma_vertical_collocated_flag | u(1) |
| } | |
| if( sps_ptl_dpb_hrd_params_present_flag ) { | |
| sps_timing_hrd_params_present_flag | u(1) |
| if( sps_timing_hrd_params_present_flag ) { | |
| general_timing_hrd_parameters( ) | |
| if( sps_max_sublayers_minus1 > 0 ) | |
| sps_sublayer_cpb_params_presen_flag | u(1) |
| firstSubLayer = sps_sublayer_cpb_params_present_flag ? 0 : | |
| sps_max_sublayers_minus1 | |
| ols_timing_hrd_parameters( firstSubLayer, sps_max_sublayers_minus1 ) | |
| } | |
| } | |
| sps_field_seq_flag | u(1) |
| sps_vui_parameters_present_flag | u(1) |
| if( sps_vui_parameters_present_flag ) { | |
| sps_vui_payload_size_minus1 | ue(v) |
| while( !byte_aligned( ) ) | |
| sps_vui_alignment_zero_bit | f(1) |
| vui_payload( sps_vui_payload_size_minus1 + 1 ) | |
| } | |
| sps_extension_flag | u(1) |
| if( sps_extension_flag ) | |
| while( more_rbsp_data( ) ) | |
| sps_extension_data_flag | u(1) |
| rbsp_trailing_bits( ) | |
| } | |

The reduced set version may be applied to the Picture Parameter Set (PPS) / Slice Header (SH) / Picture Header (PH) if/when transmitted for the base layer.

When the current picture in the enhancement layer and its reference base layer external pictures share the same POC, an enhancement layer frame at POC equal to 64 may reference a base layer frame at POC equal to 64, as shown in FIG. 7. The decoder may not find the corresponding base layer frame in the existed decoded picture buffer (DPB) yet. If/when the (e.g., new) introduced vps_base_layer_external_flag or sps_base_layer_external_flag is equal to 1, the external pictures in the base layer may be stored in the DPB and marked as used for long-term reference, which could be used as references for the future frames. The decoder may check and locate the corresponding external base layer frame in the DPB before decoding the enhancement layer.

sps_inter_layer_prediction_enabled_flag equal to 1 specifies that inter-layer prediction may be enabled for the CLVS and ILRPs may be used for inter prediction of one or more coded pictures in the CLVS. A sps_inter_layer_prediction_enabled_flag equal to 0 specifies that inter-layer prediction may be disabled for the CLVS and no ILRP may be used for inter prediction of a coded picture in the CLVS. If/when sps_video_parameter_set_idis equal to 0, the value of sps_inter_layer_prediction_enabled_flag may be inferred to be equal to 0. if/when vps_independent_layer_flag[ GeneralLayerIdx[ nuh_layer_id ] ] is equal to 1, the value of sps_inter_layer_prediction_enabled_flag may be equal to 0.

For the enhancement layers to correctly reference externally provided base-layer pictures, sps_inter_layer_prediction_enabled_flag in SPS may be coded. The second operation in examples described herein may allow coding sps_inter_layer_prediction_enabled_flag if vps_base_layer_external_flag or sps_base_layer_external_flag equals to 1, for example, as depicted in Table 4.

**Table 4**

| | |
|---|---|
| seq_parameter_set_rbsp( ) { | **Descriptor** |
| ... | ... |
| if( sps_video_parameter_set_id> 0 ∥ vps_base_layer_external_flag > 0) | |
| sps_inter_layer_prediction_enabled_flag | u(1) |
| ... | ... |

When both sps_base_layer_external_flag and sps_inter_layer_prediction_enabled_flag equal to 1, the reference picture list (RPL) in the enhancement layer may allow the current picture to refer the base layer external picture at the same POC, for example, with an RPL configuration.

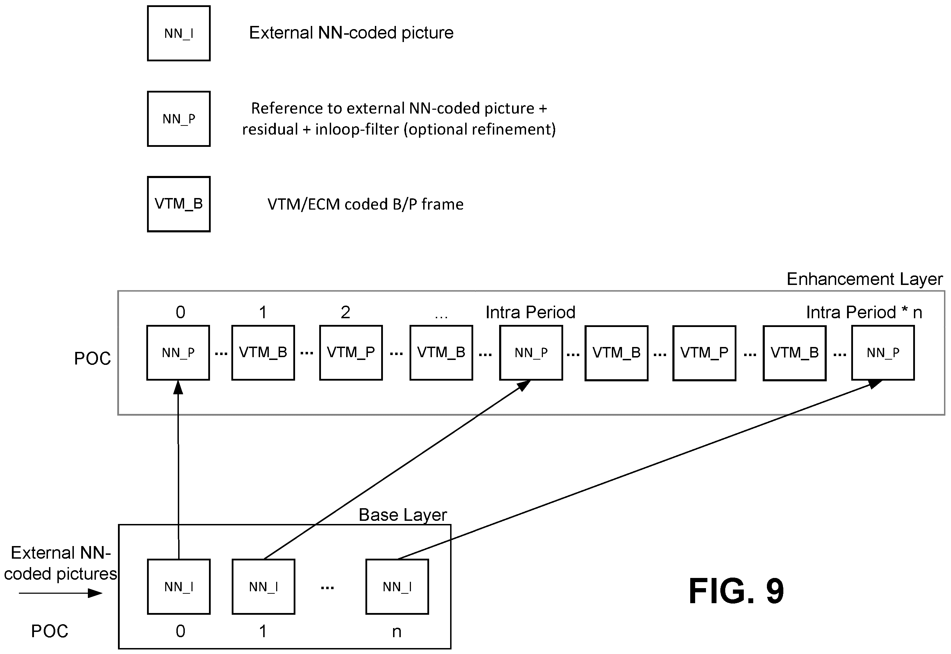

If/when the current picture in the enhancement layer and its reference base layer external picture is not sharing the same POC, as shown in FIG. 9, it may be assigned the correct POC value to ensure proper referencing pictures at an intra period may be external NN-coded and be stored in the base layer as shown in FIG. 9, which could reduce the external bitstream size. In examples case, an enhancement layer frame with POC equal to 64 may reference a corresponding base layer external coded frame with POC equal to 1.

In examples, the third operation in examples described herein may configure RPL to include pictures from an external base layer by assigning the correct POC values for proper referencing with additional syntax. The assignment may use the absolute POC value, or a POC delta value of the difference between the POC value of enhancement and the POC value of base layer, or a relative value of dividing the POC value of enhancement layer to a signaled ratio value.

The following includes an example to assign a relative value of dividing the POC value of an enhancement layer to a signaled ratio value, as depicted in Table 5.

**Table 5**

| | |
|---|---|
| seq_parameter_set_rbsp( ) { | **Descriptor** |
| ... | ... |
| if( sps_video_parameter_set_id> 0 ∥ vps_base_layer_external_flag > 0) | |
| sps_inter_layer_prediction_enabled_flag | u(1) |
| if(sps_inter_layer_prediction_enabled_flag > 0 && vps_base_layer_external_flag > 0) | |
| sps_base_layer_external_poc_ratio_minus1 | ue(v) |
| ... | ... |

sps_base_layer_external_poc_ratio_minus1 specifies the value of the ratio between the POC value of the current picture in an enhancement layer to the POC value of its reference picture in the base layer, minus one.

When the value of sps_base_layer_external_poc_ratio_minus1 equal to 1, the current picture in the enhancement layer and its reference base layer external picture may be sharing the same POC. If/when the value of sps_base_layer_external_poc_ratio_minus1 equal to 63, then an enhancement layer picture whose POC corresponds to one or more intra period (e.g., intra period equal to 64) in the enhancement layer may allow ILRP, which may reference external pictures in the base layer.

Modifications may be described herein for a decoding process for picture order count that a video coded which assigns a valid POC of the externally provided reference picture.

Features described herein may be associated with a decoding process for reference picture lists construction.

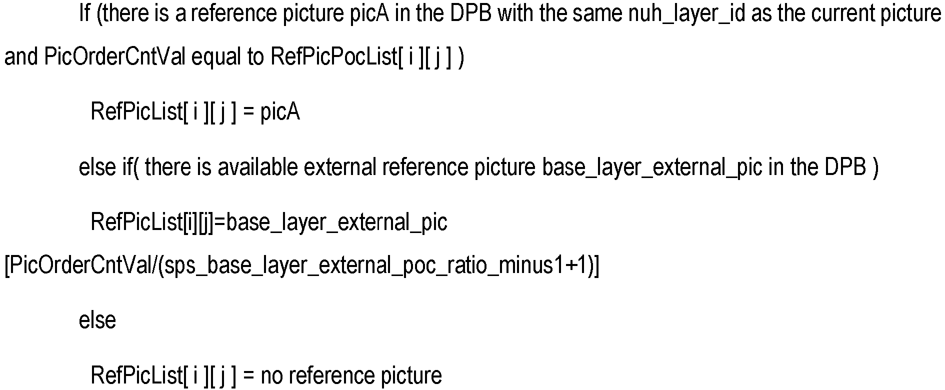

Examples described herein of referencing external base layer pictures in enhancement layers may involve (e.g., several) operations. The enhancement layer may use additional VPS/SPS and RPL syntaxes to correctly reference the base layer picture which may be provided externally.

Combining NN for Intra frames and coding for Inter frames with the multi-layer scheme may yield favorable compression rates, reducing the overall data size without sacrificing quality, and it could allow decoder devices for dynamic adaptation to different coding codecs. Moreover, the base layer could be coded by GPU (NPU) while the enhancement layers could be coded by CPU separately.

Features described herein may be associated with an external parameter set (EPS) or a Supplemental Enhancement Information (SEI) message.

To minimize the syntaxes modification of the SPS/PPS/SH/PH examples described herein include determining a (e.g., new) parameter set called External Parameter Set (EPS) tailored for an externally provided layer or reference pictures.

An External Parameter Set (EPS) may be a cherry pick of SPS, PPS, SH and PH syntaxes that could describe the external reference (e.g., resolution, chroma format, bitdepth and conformance window, POC ratio) which may be available for correct decoding. EPS could replace SPS, PPS, SH and PH, if/when the introduced syntax vps_base_layer_external_flag equals to 1. Table 6 includes an example of syntax in tabular form for the External Parameter Set.

**Table 6: External parameter set RBSP syntax**

| | |
|---|---|
| ext_parameter_set_rbsp( ) { | **Descriptor** |
| if(vps_base_layer_external_flag > 0) { | |
| eps_pic_width_max_in_luma_samples | ue(v) |
| eps_pic_height_max_in_luma_samples | ue(v) |
| chroma_and_bit_depth_eps_present_flag | u(1) |
| if( chroma_and_bit_depth_eps_present_flag ) { | |
| chroma_format_eps_idc | u(2) |
| bit_depth_eps_luma_minus8 | u(4) |
| bit_depth_eps_chroma_minus8 | u(4) |
| } | |
| eps_conformance_window_flag | u(1) |
| if( eps_conformance_window_flag ) { | |
| eps_conf_win_left_offset | ue(v) |
| eps_conf_win_right_offset | ue(v) |
| eps_conf_win_top_offset | ue(v) |
| eps_conf_win_bottom_offset | ue(v) |
| } | |
| eps_poc_ratio_minus1 | ue(v) |
| rbsp_trailing_bits( ) | |
| } | |
| } | |

eps_pic_width_max_in_luma_samples specifies the maximum width, in units of luma samples, of a decoded picture referring to the EPS. eps_pic_width_max_in_luma_samples may not be equal to 0 and may be an integer one or more of Max( 8, MinCbSizeY ).

sps_pic_height_max_in_luma_samples specifies the maximum height, in units of luma samples, of a decoded picture referring to the EPS. eps_pic_height_max_in_luma_samples may not be equal to 0 and may be an integer one or more of Max( 8, MinCbSizeY ).

chroma_and_bit_depth_eps_present_flag equal to 1 specifies that the syntax elements chroma_format_eps_idc, bit_depth_eps_luma_minus8 and bit_depth_eps_chroma_minus8 are present in the ext_parameter_set_rbsp( ) structure.

chroma_format_eps_idc, bit_depth_eps_luma_minus8 and bit_depth_eps_chroma_minus8 specify the chroma sampling relative to the luma sampling and the bit depth of the samples of the luma and chroma arrays.

eps_conformance_window_flag equal to 1 indicates that the conformance cropping window offset parameters follow in the EPS. eps_conformance_window_flag equal to 0 indicates that the conformance cropping window offset parameters are not present in the EPS.

eps_conf_win_left_offset, eps_conf_win_right_offset, eps_conf_win_top_offset, and eps_conf_win_bottom_offset specify the cropping window that is applied to pictures width equal to eps_pic_width_max_in_luma_samples and height equal to eps_pic_height_max_in_luma_samples. if/when eps_conformance_window_flag is equal to 0, the values of eps_conf_win_left_offset, eps_conf_win_right_offset, eps_conf_win_top_offset, and eps_conf_win_bottom_offset are inferred to be equal to 0.

eps_poc_ratio_minus1 specifies the value of the ratio between the POC value of the current picture in enhancement layer to the POC value of its reference picture in the base layer, minus one.

Features described herein may include an SEI message. Examples may include adding metadata or an SEI message describing the external reference (e.g., resolution, chroma format, bitdepth and conformance window, POC ratio...), which may be available for correct decoding.

Features described herein may include NN NAL unit type and NN slice type. When the reference frames are NN-coded, information may not be available or may need adjustments for the current frame. This may include intra prediction modes, partitioning prediction, CABAC initialization, or prediction modes that are present in traditional coding methods. Network abstraction layer (NAL) unit types and slice types may be designed for coding methods and may not fully accommodate the features of NN-coded frames. To address these discrepancies, it may be beneficial to determine(e.g., new) NAL unit types and/or slice types that may accommodate the characteristics of NN-coded frames.

In examples described herein, (e.g., new) NAL unit and/or slice type types tailored for NN-coded frames may be introduced.

Features described herein may include an NN NAL unit type. The decoder may know if/when neural network (NN) is used to decode the frame. A slice may be included within an NAL unit. The NAL unit type (e.g., nal_unit_type) may tell the decoder how to handle the slice at a higher level. To do so, a (e.g., new) NAL unit type may be introduced for addressing NN-coded slices.

The nal_unit_type field may be already 5 bits (supports 0-31 values), and free space may be available to use an unspecified non-VCL NAL unit type (e.g., UNSPEC_28) as a (e.g., new) NN VCL NAL unit type (e.g., NN_NUT) in the Table 7.

**Table 7 - NAL unit type codes and NAL unit type classes**

| **nal_unit_typ e** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp( ) | |
| 1 | STSA_NUT | Coded slice of an STSA picture or subpicture* | VCL |
| | | slice_layer_rbsp( ) | |
| 2 | RADL_NUT | Coded slice of a RADL picture or subpicture* | VCL |
| | | slice_layer_rbsp( ) | |
| 3 | RASL_NUT | Coded slice of a RASL picture or subpicture* | VCL |
| | | slice_layer_rbsp( ) | |
| 4..6 | RSV_VCL_4.. | Reserved non-IRAP VCL NAL unit types | VCL |
| | RSV_VCL_6 | | |
| 7 | IDR_W_RADL | Coded slice of an IDR picture or subpicture* | VCL |
| 8 | IDR_N_LP | slice_layer_rbsp( ) | |
| 9 | CRA_NUT | Coded slice of a CRA picture or subpicture* | VCL |
| | | slice_layer_rbsp( ) | |
| 10 | GDR_NUT | Coded slice of a GDR picture or subpicture* | VCL |
| | | slice_layer_rbsp( ) | |
| 11 | RSV_IRAP_11 | Reserved IRAP VCL NAL unit type | VCL |
| 12 | OPI_NUT | Operating point information | non-VCL |
| | | operating_point_information_rbsp( ) | |
| 13 | DCI_NUT | Decoding capability information | non-VCL |
| | | decoding_capability_information_rbsp( ) | |
| 14 | VPS_NUT | Video parameter set | non-VCL |
| | | video_parameter_set_rbsp( ) | |
| 15 | SPS_NUT | Sequence parameter set | non-VCL |
| | | seq_parameter_set_rbsp( ) | |
| 16 | PPS_NUT | Picture parameter set | non-VCL |
| | | pic_parameter_set_rbsp( ) | |
| 17 | PREFIX_APS_NUT | Adaptation parameter set | non-VCL |
| 18 | SUFFIX_APS_NUT | adaptation_parameter_set_rbsp( ) | |
| 19 | PH_NUT | Picture header | non-VCL |
| | | picture_header_rbsp( ) | |
| 20 | AUD_NUT | AU delimiter | non-VCL |
| | | access_unit_delimiter_rbsp( ) | |
| 21 | EOS_NUT | End of sequence | non-VCL |
| | | end_of_seq_rbsp( ) | |
| 22 | EOB_NUT | End of bitstream | non-VCL |
| | | end_of_bitstream_rbsp( ) | |
| 23 | PREFIX_SEI_NUT | Supplemental enhancement information | non-VCL |
| 24 | SUFFIX_SEI_NUT | sei_rbsp( ) | |
| 25 | FD_NUT | Filler data | non-VCL |
| | | filler_data_rbsp( ) | |
| 26 | RSV_NVCL_26 | Reserved non-VCL NAL unit types | non-VCL |
| 27 | RSV_NVCL_27 | | |
| 28 | NN_NUT | Coded slice of a NN-coded picture or subpicture* | VCL |
| | | slice_layer_rbsp( ) | |
| 29..31 | UNSPEC_29.. | Unspecified non-VCL NAL unit types | non-VCL |
| | UNSPEC_31 | | |
| * indicates a property of a picture if/when pps_mixed_nalu_types_in_pic_flag is equal to 0 and a property of the subpicture if/when pps_mixed_nalu_types_in_pic_flag is equal to 1. | | | |

For a VCL NAL unit that includes nal_unit_type equal to NN_NUT, a picture and/or a subpicture may be coded with neural networks. If/when nal_unit_type is equal to NN_NUT, which kind of slices it may carry may be defined in slice header (SH). Adjustments for disabling/enabling tools (e.g., disabling ALF, LMCS, and/or Scaling list) may be introduced in SH or picture header (PH).

Examples may include modifications in SH for adapting (e.g., new) introduced nal_unit_type, for example, as depicted in Table 8:

**Table 8**

| | |
|---|---|
| slice_header( ) { | **Descriptor** |
| ... | ... |
| if( ph_inter_slice_allowed_flag \| \| nal_unit_type = = NN_NUT ) | |
| sh_slice_type | ue (v) |
| if( nal_unit_type = = IDR_W_RADL \| \| nal_unit_type = = IDR_N_LP \| \| | |
| nal_unit_type = = CRA_NUT \| \| nal_unit_type = = GDR_NUT && nal_unit_type = = NN_NUT) | |
| sh_no_output_of_prior_pics_flag | u(1) |
| if( sps_alf_enabled_flag && !pps_alf_info_in_ph_flag && nal_unit_type ! = NN_NUT) { | |
| sh_alf_enabled_flag | u(1) |
| ... | ... |
| if( ph_lmcs_enabled_flag && !sh_picture_header_in_slice_header_flag && nal_unit_type ! = NN_NUT) | |
| sh_lmcs_used_flag | u(1) |
| if( ph_explicit_scaling_list_enabled_flag && !sh_picture_header_in_slice_header_flag && nal_unit_type ! = NN_NUT) | |
| sh_explicit_scaling_list_used_flag | u(1) |
| ... | ... |
| } | |

Features described herein may include a NN slice type. A slice type may be defined in the SH, with three slice types defined (e.g., B slice / P slice / I slice). A (e.g., new) N slice type may be introduced in the slice header to indicate the current slice is NN-coded. sh_slice_type specifies that the coding type of the slice is modified in examples, such as in Table 9.

**Table 9 - Name association to sh_slice_type**

| **sh_slice_type** | **Name of sh_slice_type** |
|---|---|
| 0 | B (B slice) |
| 1 | P (P slice) |
| 2 | I (I slice) |
| 3 | N (NN-coded slice) |

For example, if one of the following conditions is true, the value of sh_slice_type may be inferred to be equal to 3: when the vps_base_layer_external_flag / sps_base_layer_external_flag equals to 1; or when the value of nal_unit_type equals to NN_NUT.

When sh_slice_type is N, adjustments of the prior-art definition could be introduced in PH, SH, and/or in low-level syntax (e.g., Coding unit syntax).

Features described herein may include adjustments for an NN slice type in picture header. For example, consider ph_intra_slice_allowed_flag and ph_inter_slice_allowed_flag in PH. Both flags may be set to 0 if/when coded slices of the picture include sh_slice_type equal to 3, as the current slice may be neither intra coded nor inter coded, and may be NN-coded instead.

ph_inter_slice_allowed_flag equal to 0 specifies that all coded slices of the picture include sh_slice_type equal to 2 or 3. ph_inter_slice_allowed_flag equal to 1 specifies that there may or may not be one or more coded slices in the picture that include sh_slice_type equal to 0 or 1.

ph_intra_slice_allowed_flag equal to 0 specifies that coded slices of the picture include sh_slice_type equal to 0 or 1 or 3. ph_intra_slice_allowed_flag equal to 1 specifies that there may or may not be one or more coded slices in the picture that includes sh_slice_type equal to 2. When not present, the value of ph_intra_slice_allowed_flag may be inferred to be equal to 1.

Features described here may include an NN slice type in a slice header. For examples in SH, if/when sh_slice_type of the current slice, or reference slice of the current slice, equals to N slice, the CABAC initialization may be skipped, or be treated as sh_slice_type equal to I slice, which the derivation process may be as follows:

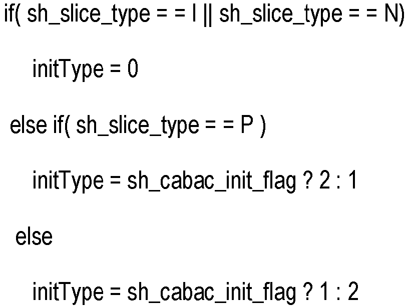

**Table 10**

| | |
|---|---|
| slice_header( ) { | **Descriptor** |
| ... | ... |
| if( sh_slice_type != l \| \| sh_slice_type != N) { | |
| if( pps_cabac_init_present_flag ) | |
| sh_cabac_init_flag | u(1) |
| ... | ... |
| } | |
| ... | ... |
| } | |

Adjustments may be made for (e.g., new) NN slice type in a coding unit syntax level. For coding unit syntax, if/when sh_slice_type equals to N slice, additional (e.g., new) values or default values might be set for the (e.g., new) introduced NN-coded slice. Mode Type might be set to a (e.g., new) defined syntax MODE_TYPE_NN if/when sh_slice_type equals to N slice. In an example, the intra prediction mode may be inferred to be equal to PLANAR mode for the N slice; or a virtual intra prediction mode for a block may be derived and set for the N slice. Moreover, if/when the reference slice of the current slice is N slice, the temporal partitioning prediction may be disabled for the current slice.

Features described herein may include an external bitstream with NN-coded frames. To minimize syntax modification, an external NN-coded bitstream may be provided. After an external NN-coded bitstream is separately decoded with an unspecified NN codec, the external reconstrued NN-coded picture may be stored as reference pictures in a decoded picture buffer (DPB).

Since video data (e.g., the bitstream) may be externally provided, the decoder (e.g., a VVC decoder) may not decode the external reference frames from the current bitstream. The external pictures instead may be decoded from the external bitstream by a decoder using an unspecified NN codec. Once decoded, they may be stored in the DPB and marked as used for long-term reference. Future frames in the bitstream (e.g., a VVC bitstream) may use them as references.

If the enhancement layer is to refer to a base layer picture from the external bitstream later in the video, it may access it because it has been stored in the DPB as a long-term reference. To determine whether the enhancement layer may correctly reference base-layer pictures provided by the external bitstream, an NN decoder may first decode the external bitstream. The decoded frames may be inserted into the DPB, allowing the decoder to find the corresponding base layer frame in the DPB before decoding the enhancement layer. The process may be integrated within the single layer framework, or multilayer framework. The external bitstream may use possible codecs besides an NN codec.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
a processor configured to:
obtain video data associated with a plurality of layers;
obtain a first picture associated with a first layer of the plurality of layers, wherein the first picture is coded using a first codec that is based on a neural network (NN);
obtain a second picture associated with a second layer of the plurality of layers, wherein the second picture is coded using a second codec that is different from the first codec; and
decode the second picture using the first picture and the second codec.

2. A device for encoding video data, comprising:
a processor configured to:
determine that the video data is associated with a plurality of layers;
obtain a first picture associated with a first layer of the plurality of layers, wherein the first picture is coded using a first codec that is based on a neural network (NN);
encode, based on the first picture and a second codec, a second picture associated with a second layer of the plurality of layers, wherein the second codec is different from the first codec;
generate a residual based on the encoded second picture; and
include the residual in the video data.

3. The device of claim 1 or claim 2, wherein the first layer is a base layer, the second layer is an enhancement layer, and the processor is further configured to:
obtain a third picture associated with the first layer from an external source associated with a third codec, wherein the third codec is different from the second codec.

4. The device of claim 3, wherein the processor is further configured to:
generate a reference picture list (RPL) for the second picture, wherein the reference picture list indicates the third picture as an inter-layer reference picture (ILRP);
obtain an indicator of a picture order count (POC) associated with the third picture;
identify the third picture in the RPL based on the indicator of the POC; and
predict the second picture using the third picture as the ILRP.

5. The device of claim 3, wherein the processor is further configured to:
obtain a parameter set;
obtain an external picture indicator from the parameter set;
determine, based on the external picture indicator, that the first layer comprises an external picture;
modify the third picture based on a reduced version of the parameter set; and
predict the second picture using the modified third picture.

6. The device of claim 3, wherein the processor is further configured to:
obtain a first parameter set;
obtain, from the first parameter set, an external picture indicator;
determine, based on the external picture indicator, that the first layer comprises an external picture;
modify the third picture using a second parameter set; and
predict the second picture using the modified third picture.

7. The device of claim 6, wherein the second parameter set is an external parameter set or received via a supplemental enhancement information (SEI).

8. The device of claim 5 or claim 6, wherein the processor is further configured to:
receive metadata associated with the third picture via a supplemental enhancement information (SEI), wherein the third picture is modified further based on the metadata.

9. The device of any one of claims 1-8, wherein the processor is further configured to:
determine, based on a field of a network abstraction layer (NAL) unit type indicator or a slice type indicator in a slice header, that the first picture associated with the first layer is coded using the first codec.

10. The device of any one of claims 1-9, wherein the video data is received via a first bitstream, and the processor is further configured to:
determine that the first picture associated with the first layer is an external picture; and
obtain the first picture via a second bitstream, wherein the second bitstream is an external bitstream associated with an external source.

11. The device of any one of claims 1-10, wherein the first picture is an intra picture type, and the second picture is an inter picture type.

12. A method for video decoding, the method comprising:
obtaining video data associated with a plurality of layers;
obtaining a first picture associated with a first layer of the plurality of layers, wherein the first picture is coded using a first codec that is based on a neural network (NN);
obtaining a second picture associated with a second layer of the plurality of layers, wherein the second picture is coded using a second codec that is different from the first codec; and
decoding the second picture using the first picture and the second codec.

13. A method for encoding video data, the method comprising:
determining that the video data is associated with a plurality of layers;
obtaining a first picture associated with a first layer of the plurality of layers, wherein the first picture is coded using a first codec that is based on a neural network (NN);
encoding, based on the first picture and a second codec, a second picture associated with a second layer of the plurality of layers, wherein the second codec is different from the first codec;
generating a residual based on the encoded second picture; and
including the residual in the video data.

14. The method of claim 12 or claim 13, wherein the first layer is a base layer, the second layer is an enhancement layer, and the method further comprises:
obtaining a third picture associated with the first layer from an external source associated with a third codec, wherein the third codec is different from the second codec.

15. The method of claim 14, wherein the method further comprises:
generating a reference picture list (RPL) for the second picture, wherein the reference picture list indicates the third picture as an inter-layer reference picture (ILRP);
obtaining an indicator of a picture order count (POC) associated with the third picture;
identifying the third picture in the RPL based on the indicator of the POC; and
predicting the second picture using the third picture as the ILRP.
